# EUROPEAN PATENT APPLICATION

(11) **EP 2 353 887 A2**
(43) Date of publication of application: **10.08.2011**
(21) Application number: 11000309.2
(22) Date of filing: 17.01.2011
(51) Int. Cl.: B60C 15/06

(54) **Pneumatic tire**

(30) Priority: 20.01.2010 US 690284
(71) Applicant: The Goodyear Tire & Rubber Company, Akron, OH 44316-0001 (US)
(72) Inventor: King, Kelly Sue, Wadsworth Ohio 44281 (US); Edson, Matthew Jared, Copley Ohio 44321 (US); Gulas, Brad Stephen, Fairlawn Ohio 44333 (US); Masa, Kevin Michael, Stow Ohio 44224 (US); Renner, Leyla Kristen, North Canton Ohio 44720 (US); Marazzi, Eric John, Tallmadge Ohio 44278 (US)
(74) Representative: Kutsch, Bernd

(57) **Abstract**

The present invention is directed to a pneumatic tire comprising a tread (110), a belt structure (112), and a carcass (114), wherein the carcass (114) comprises a preferably radial ply (118) and two bead sections (130a, 130b), each bead section (130a, 130b) comprising a bead (132) and an apex comprising an inner apex section (138) and an outer apex section (136), wherein the inner apex section (138) comprises a rubber composition having a shear storage modulus G' as measured at 1% strain and 100°C according to ASTM D5289 ranging from 18 to 32 MPa, and wherein the outer apex section (136) comprises a rubber composition having a shear storage modulus G' as measured at 1% strain and 100°C according to ASTM D5289 ranging from 1.2 to 10 MPa.

## Description

### Technical Field

The present invention relates to an improved design for a pneumatic tire, preferably a radial ply automobile tire, and more specifically to an improved apex for a radial ply automobile tire.

### Background of the Invention

A conventional radial-ply automobile tire includes radial plies that are wrapped around two annular inextensible beads. The portions of the plies that extend beyond the beads are turned up around the beads, forming "turn-ups." An annular rubber filler bounded by the turned up ply and the bead is called an "apex."

The choice of dimensions and material properties of the apex affects the performance of the tire, such as tire weight, sidewall stiffness, handling, ride comfort, flexural heat, material fatigue, and tire life. For example, since the apex extends up part of the length of the sidewall, increasing the stiffness of the apex increases the stiffness of the sidewall, yielding less sidewall flexing and hence less flexural heat and material fatigue, but at the cost of a rougher ride. Increasing the apex's radial length (so that it travels farther up the sidewall) further stiffens the sidewall and improves handling, which is beneficial for "high performance" tires.

### Summary of the Invention

The present invention is directed to a pneumatic tire in accordance with claim 1.

Dependent claims refer to preferred embodiments of the invention.

In a preferred aspect, the pneumatic tire comprises a tread, a belt structure, and a carcass, wherein the carcass has a radial ply and two bead sections; wherein each bead section comprises a bead and a compound apex comprising an inner apex section and an outer apex section, the inner apex section and outer apex section axially adjoining, the outer apex section disposed axially outward of the inner apex; wherein the inner apex section adjoins the bead and extends radially from the bead; wherein the outer apex section adjoins the bead and extends radially from the bead to a greater extent than the inner apex section; and wherein the inner apex section comprises a rubber composition having a shear storage modulus G' measured at 1% strain and 100°C according to ASTM D5289 ranging from 18 to 32 MPa, and the outer apex section comprises a rubber composition having a shear storage modulus G' measured at 1% strain and 100°C according to ASTM D5289 ranging from 1.2 to 10 MPa.

### Brief Description of the Drawings

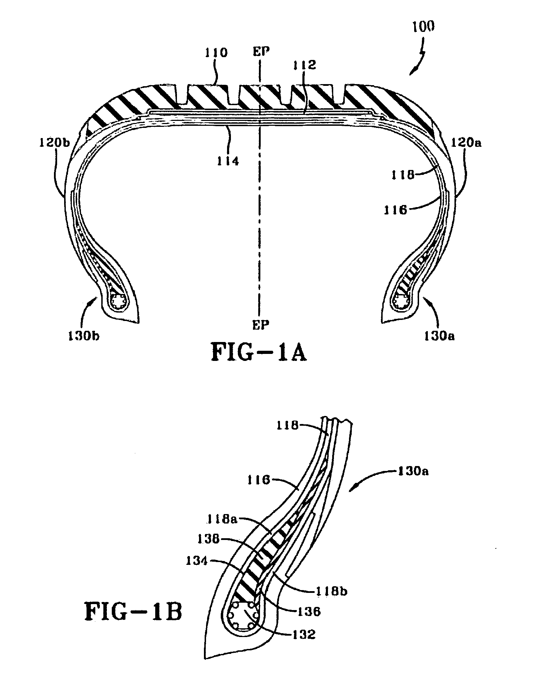

FIG. 1A shows a meridional cross-section of a radial ply pneumatic tire according to the present invention; and
FIG. 1B shows a cross-section of the bead section of FIG. 1A.

### Definitions

"Ply" means a cord-reinforced layer of rubber-coated radially deployed or otherwise parallel cords.

"Radial" and "radially" mean in a direction perpendicular to the axis of rotation of the tire.

"Radial ply tire" means a belted or circumferentially restricted pneumatic tire in which at least one ply has cords which extend from bead to bead.

### Description of the Invention

There is disclosed a pneumatic tire comprising a tread, a belt structure, and a carcass, wherein the carcass has a preferably radial ply and two bead sections; each bead section comprising a bead and a compound apex comprising an inner apex section and an outer apex section, the inner apex section and outer apex section preferably axially adjoining, the outer apex section disposed axially outward of the inner apex; the inner apex section preferably adjoining the bead and extending radially from the bead; the outer apex section preferably adjoining the bead and extending radially from the bead to a greater extent than the inner apex section; wherein the inner apex section comprises a rubber composition having a shear storage modulus G' measured at 1% strain and 100°C according to ASTM D5289 ranging from 18 to 32 MPa, and the outer apex section comprises a rubber composition having a shear storage modulus G' measured at 1% strain and 100°C according to ASTM D5289 ranging from 1.2 to 10 MPa.

FIG. 1A shows a meridional cross-section of a radial ply pneumatic tire 100 about equatorial plane EP according to the present invention, comprising a tread 110, a belt structure ("belts") 112 comprising one or more belts, and a carcass 114. The carcass 114 has an innerliner 116, at least one radial ply 118, two sidewalls 120A, 120B, and two preferably identical bead sections 130A, 130B.

FIG. 1B shows a cross-section of the bead section 130A of FIG. 1A. It should be understood that the cross-section of the bead section 130B (not shown) is the same as that of the bead section 130A. The bead section 130A includes a bead 132. The ply 118 is preferably wrapped around the bead, forming a ply axially-inner section 118A and a ply turnup 118B. A compound apex 134 is comprise an axially-inner apex 138 and an axially-outer apex 136, and is preferably surrounded by the bead 132, the ply inner section 118A and the ply turnup 118B.

The outer apex 136 is typically cross-sectionally the longer and extends radially farther outward than the inner apex 138.

The inner apex and outer apex are made of different rubber compositions, which are characterized by their stiffness. The stiffness may be characterized by several methods including the 300 percent modulus and the dynamic modulus G'. The 300% modulus values tests may be measured following ASTM Test D412-92, method B. For the G' values, which are sometimes referred to as the "shear storage modulus" or "dynamic modulus," reference may be made to Science and Technology of Rubber, second edition, 1994, Academic Press, San Diego, Calif., edited by James E. Mark et al, pages 249-254.

The tangent delta, or "tan delta," is a ratio of the shear loss modulus, also known as G", to the shear storage modulus (G'). These properties, namely the G', G" and tan delta, characterize the viscoelastic response of a rubber test sample to a tensile deformation at a fixed frequency and temperature, measured at 100°C.

The tan delta and shear storage modulus (G') are well known to those skilled in the rubber composition characterization art, particularly as it relates to tires and tire treads. The shear storage modulus (G') values are indicative of rubber compound stiffness which can relate to tire performance. The tan delta value at 100°C is considered as being indicative of hysteresis, or heat loss.

In one embodiment, the inner apex section comprises a rubber composition having a shear storage modulus G' measured at 1% strain and 100°C according to ASTM D5289 ranging from 18 to 32 MPa, and the outer apex section comprises a rubber composition having a shear storage modulus G' measured at 1% strain and 100°C according to ASTM D5289 ranging from 1.2 to 10 MPa. In one embodiment, the inner apex section comprises a rubber composition having a shear storage modulus G' measured at 1% strain and 100°C according to ASTM D5289 ranging from 23 to 31 MPa. In one embodiment, the outer apex section comprises a rubber composition having a shear storage modulus G' measured at 1% strain and 100°C according to ASTM D5289 ranging from 1.4 to 2.3 MPa.

The rubber compositions of the apex sections include at least one additional diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105°C. Suitable polybutadiene rubbers are available commercially, such as Budene® 1207 from Goodyear.

In one embodiment, a synthetic or natural polyisoprene rubber may be used.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10°C per minute.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 120 phr of silica may be used.

Various commercially available silicas may be used, such as, precipitated silicas commercially available from PPG Industries under the Hi-Sil trademark with designations 210, 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-A- 6,242,534; US-A- 6,207,757; US-A- 6,133,364; US-A- 6,372,857; US-A-5,395,891; or US-A- 6,127,488, and plasticized starch composite filler including but not limited to that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z I

in which Z is selected from the group consisting of 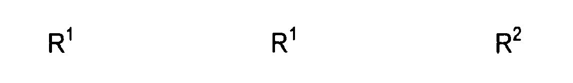 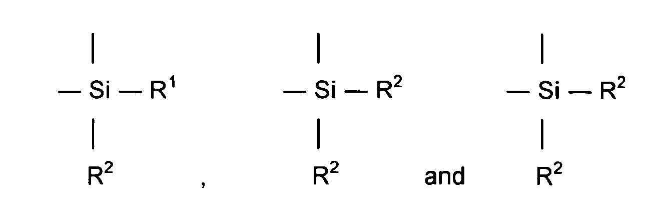 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 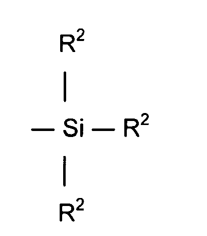 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

The rubber composition may contain an in-situ resin that is the reaction product of a methylene acceptor and a methylene donor.

In-situ resins are formed in the rubber stock and involve the reaction of a methylene acceptor and a methylene donor. The term "methylene donor" is intended to mean a chemical capable of reacting with a methylene acceptor and generate the resin in-situ. Examples of methylene donors which are suitable for use in the present invention include hexamethylenetetramine and N-substituted oxymethylmelamines, of the general formula: 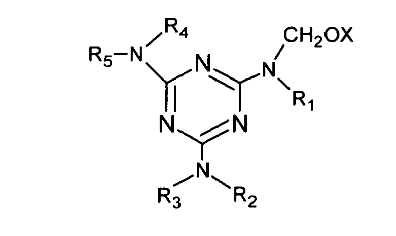 wherein X is hydrogen or an alkyl having from 1 to 8 carbon atoms, T_{1'} R₂, R₃, R₄ and R₅ are individually selected from the group consisting of hydrogen, an alkyl having from 1 to 8 carbon atoms, the group -CH₂OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine, N,N'N"-tributyl-N,N',N"-trimethylol-melamine, hexamethoxymethylmelamine, and hexaethoxymethylmelamine. The N-methylol derivatives of melamine are prepared by known methods.

The amount of methylene donor in the rubber stock may vary. In one embodiment, the amount of methylene donor ranges from 0.5 to 4 phr. In another embodiment, the amount of methylene donor ranges from 1 to 3 phr.

The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, resorcinol novolak resins and mixtures thereof. Examples of methylene acceptors include but are not limited to those disclosed in US-A- 6,605,670; US-A- 6,541,551; US-A- 6,472,457; US-A- 5,945,500; US-A- 5,936,056; US-A- 5,688,871; US-A- 5,665,799; US-A-5,504,127; US-A- 5,405,897; US-A- 5,244,725; US-A- 5,206,289; US-A- 5,194,513; US-A- 5,030,692; US-A- 4,889,481; US-A- 4,605,696; US-A- 4,436,853; and US-A-4,092,455. Examples of modified phenol novolak resins include but are not limited to cashew nut oil modified phenol novolak resin, tall oil modified phenol novolak resin and alkyl modified phenol novolak resin.

Other examples of methylene acceptors include activated phenols by ring substitution and a cashew nut oil modified novalak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the rubber stock may vary. In one embodiment, the amount of methylene acceptor ranges from 0.5 to 20 phr. In another embodiment, the amount of methylene acceptor ranges from 1 to 15 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The pneumatic tire of the present invention may be a race tire, passenger tire, aircraft tire, agricultural, earthmover, off-the-road, or truck tire. In one embodiment, the tire is a passenger or truck tire. The tire may be a radial or bias. Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, a tire made with a compound apex according to the present invention is compared with a tire made with a standard apex. Tire No. 1 included a conventional apex made of a single rubber composition. Tire No. 2 included a compound apex according to the present invention, with a outer apex section formed from the same rubber composition as the apex of Tire No. 1, and an inner apex section from a different rubber composition. The tires were tested for various performance indicators, with results as shown in Table 1. All performance indicators are expressed as an index with respect to a control tire having values of 100; a higher index indicates a better performance.

**Table 1**

| **Tire No.** | **1** | **2** |
|---|---|---|
| Apex Type | Single | Compound |
| Inner Apex G', MPa¹ | 9.9 | 19.2 |
| Outer Apex G', MPa | - | 9.9 |

| **Performance Index** | | |
|---|---|---|
| Ride/Comfort | 101.3 | 100.0 |
| Subjective Noise | 100.0 | 100.0 |
| Treadwear FWG/FWP | 102.3 | 102.3 |
| Treadwear FWG avg | 102.4 | 102.4 |
| Wet Braking | 106.0 | 106.0 |
| Traction- Wet | 101.9 | 101.9 |
| Wet Handling | 105.8 | 105.4 |
| Subjective Handling | 99.9 | 101.6 |
| Dry Handling | 103.7 | 103.9 |
| Aquaplaning Curved | 105.0 | 106.0 |
| Rolling Resistance | 96.7 | 99.3 |
| Traction- Dry | 100.5 | 100.5 |
| Dry Braking | 101.0 | 104.0 |

| | | |
|---|---|---|
| ¹ Shear storage modulus G' at 1% strain at 100°C, determined according to standard test protocol ASTM D5289 using a Rubber Process Analyzer RPA 2000™ instrument by Alpha Technologies, formerly of the Flexsys Company and formerly of the Monsanto Company. References to an RPA 2000 instrument may be found in the following publications: H. A. Palowski, et al, Rubber World, June 1992 and January 1997, as well as Rubber & Plastics News, April 26 and May 10, 1993. | | |

As seen in Table 1, Tire No. 2 with the compound apex according to the present invention showed poorer ride, but improved subjective handling, curved aquaplaning, rolling resistance and dry braking.

### Example 2

In this example, a tire made with a compound apex according to the present invention is compared with a tire made with a standard apex. Tire No. 3 included a conventional apex made of a single rubber composition. Tire No. 4 included a compound apex according to the present invention, with a outer apex section formed from the same rubber composition as the apex of Tire No. 3, and an inner apex section from a different rubber composition. The tires were tested for various performance indicators, with results as shown in Table 2. All performance indicators are expressed as an index with respect to a control tire having values of 100; a higher index indicates a better performance.

**Table 2**

| **Tire No.** | **3** | **4** |
|---|---|---|
| Apex Type | Single | Compound |
| Inner Apex G', MPa | 1.7 | 23.5 |
| Outer Apex G', MPa | - | 1.7 |

| **Performance Index** | | |
|---|---|---|
| Ride/Comfort | 102.5 | 101.3 |
| Subjective Noise | 100.0 | 98.7 |
| Wet Braking | 104.0 | 104.0 |
| Wet Handling | 103.6 | 103.0 |
| Subjective Handling | 98.1 | 101.5 |
| Dry Handling | 100.8 | 101.2 |
| Aquaplaning Curved | 107.5 | 108.5 |
| Rolling Resistance | 103.9 | 100.3 |
| Dry Braking | 98.0 | 101.9 |

As seen in Table 2, Tire No. 4 with the compound apex according to the present invention showed improved subjective handling, dry handling, and curved aquaplaning, but poorer ride, noise and rolling resistance.

### Example 3

In this example, a tire made with a compound apex according to the present invention is compared with a tire made with a standard apex. Tire No. 5 included a conventional apex made of a single rubber composition. Tire No. 6 included a compound apex according to the present invention, with a outer apex section formed from the same rubber composition as the apex of Tire No. 5, and an inner apex section from a different rubber composition. The tires were tested for various performance indicators, with results as shown in Table 3. All performance indicators are expressed as an index with respect to a control tire having values of 100; a higher index indicates a better performance.

**Table 3**

| **Tire No.** | **5** | **6** |
|---|---|---|
| Apex Type | Single | Compound |
| Inner Apex G', MPa¹ | 1.6 | 26.5 |
| Outer Apex G', MPa | - | 1.6 |

| **Performance Index** | | |
|---|---|---|
| Ride/Comfort | 101.9 | 101.9 |
| Subjective Noise | 99.2 | 100.7 |
| Wet Braking | 105.0 | 102.0 |
| Wet Handling | 99.0 | 99.5 |
| Subjective Handling | 96.7 | 102.7 |
| Dry Handling | 100.6 | 100.1 |
| Dry Handling Lap Times, sec | 102.2 | 100.6 |
| Dry Braking | 103.0 | 103.0 |
| Aquaplaning Curved | 102.0 | 99.5 |
| Rolling Resistance | 102.3 | 103.4 |

As seen in Table 3, tire no. 6 with the compound apex according to the present invention showed equivalent ride, better subjective handling, subjective noise, and rolling resistance.

## Claims

1. A pneumatic tire comprising a tread (110), a belt structure (112), and a carcass (114), wherein the carcass (114) comprises a preferably radial ply (118) and two bead sections (130a, 130b), each bead section (130a, 130b) comprising a bead (132) and an apex comprising an inner apex section (138) and an outer apex section (136), wherein the inner apex section (138) comprises a rubber composition having a shear storage modulus G' as measured at 1% strain and 100°C according to ASTM D5289 ranging from 18 to 32 MPa, and wherein the outer apex section (136) comprises a rubber composition having a shear storage modulus G' as measured at 1% strain and 100°C according to ASTM D5289 ranging from 1.2 to 10 MPa.

2. The pneumatic tire of claim 1 wherein the inner apex section (138) and the outer apex section (136) are at least partially axially adjoining.

3. The pneumatic tire of claim 1 or 2 wherein the outer apex section (136) is disposed axially outward of the inner apex section (138).

4. The pneumatic tire of claim 1 wherein the outer apex section (136) is disposed radially outward of the inner apex section (138).

5. The pneumatic tire of at least one of the previous claims wherein the inner apex section (138) adjoins the bead (132) and extends radially from the bead (132).

6. The pneumatic tire of at least one of the previous claims wherein the outer apex section (136) adjoins the bead (132) and extends radially from the bead.

7. The pneumatic tire of at least one of the previous claims wherein the outer apex section (136) extends radially to a greater extend than the inner apex section (138).

8. The pneumatic tire of at least one of the previous claims wherein the outer apex section (136) extends radially in a range of from 105 to 150%, alternatively in a range of from 115 to 140%, of the radial extend of the inner apex section (138).

9. The pneumatic tire of at least one of the previous claims wherein the outer apex section (136) has a maximum axial thickness which is less than the maximum axial thickness of the inner apex section (138).

10. The pneumatic tire of at least one of the previous claims wherein the outer apex section (136) has a maximum axial thickness which is in a range of from 10 to 50%, alternatively in a range of from 15 to 35%, of the maximum axial thickness of the inner apex section (138).

11. The pneumatic tire of at least one of the previous claims wherein the inner apex section (138) comprises a rubber composition having a shear storage modulus G' as measured at 1% strain and 100°C according to ASTM D5289 ranging from 23 to 31 MPa.

12. The pneumatic tire of at least one of the previous claims wherein the outer apex section (136) comprises a rubber composition having a shear storage modulus G' as measured at 1% strain and 100°C according to ASTM D5289 ranging from 1.4 to 2.3 MPa.

13. The pneumatic tire of at least one of the previous claims wherein each rubber composition comprises at least one diene based elastomer selected from the group consisting of natural rubber, synthetic polyisoprene, polybutadiene and styrenebutadiene rubber.

14. The pneumatic tire of at least one of the previous claims wherein each rubber composition comprises at least one filler selected from the group consisting of silica and carbon black, and/or wherein each rubber composition comprises from 10 to 150 phr of carbon black.

15. The pneumatic tire of at least one of the previous claims wherein each rubber composition comprises an in-situ resin derived from a methylene donor and methylene acceptor.
